# EUROPÄISCHE PATENTSCHRIFT

(11) **EP 2 674 616 B1**
(45) Veröffentlichungstag und Bekanntmachung des Hinweises auf die Patenterteilung: **08.05.2019**
(21) Anmeldenummer: 13160659.2
(22) Anmeldetag: 22.03.2013
(51) Int. Cl.: F03D 7/02, F03D 7/04, F03D 17/00

(54) **Windkraftanlagensteuereinrichtung sowie System zum Steuern eines Windparks**
Wind power plant control device and system for controlling a wind farm
Dispositif de commande d'installation éolienne et système de commande d'un parc éolien

(30) Priorität: 11.06.2012 DE 102012011357
(43) Veröffentlichungstag der Anmeldung: 18.12.2013
(73) Patentinhaber: innogy SE, 45128 Essen (DE)
(72) Erfinder: Koch, Dr. Friedrich, 47623 Kevelaer (DE); Schierenbeck, Olaf, 21220 Seevetal (DE); Schöppenthau, Kai, 21220 Seevetal (DE)
(74) Vertreter: Cohausz & Florack

(56) Entgegenhaltungen:
- EP-A2- 1 460 266
- EP-A2- 2 169 218
- DE-A1-102004 051 843
- JP-A- 2007 285 214
- US-A1- 2010 078 940

## Beschreibung

Der Gegenstand betrifft eine Windkraftanalagensteuereinrichtung mit einer Stelleinrichtung zum Ausgeben eines zumindest einen Azimut einer Gondel der Windkraftanlage bestimmenden Stellwerts sowie eine Windkraftanlage mit einer solchen Steuereinrichtung als auch einen Windparksteuerungssystem.

Die Energiegewinnung aus regenerativen Quellen ist vor dem Hintergrund des zu befürchtenden Klimawandels von hohem Interesse. Eine dezentrale Energieversorgung kann zwar teilweise den Energiebedarf decken, doch müssen Großkraftwerke zur Abdeckung von Grundlasten weiterhin zur Verfügung stehen. Aus diesem Grunde werden vermehrt Windkraftanlagen zu Windparks zusammengeschlossen und als Großkraftwerk betrieben.

Gerade in großen Windparks mit Windkraftanlagen hoher Leistung, insbesondere im Offshorebereich, ist die Optimierung des Energieertrags der einzelnen Windkraftanlage von hoher Bedeutung. Kleinste Optimierungen des Energieertrags führen zu relevanten Ertragssteigerungen für jede einzelne Windkraftanlage. Zur Ertragsoptimierung werden Windkraftanlagen abhängig von zumindest der Windrichtung in den Wind gestellt, so dass die Anströmfläche des Winds auf die Flügel der Windkraftanlage optimiert ist. Hierzu wird heutzutage in jeder einzelnen Windkraftanlage zumindest ein Anemometer angebracht, mit dessen Hilfe der Azimut der Gondel der Windkraftanlage eingestellt werden kann. Je nachdem, aus welcher Richtung der Wind weht, wird der Azimut der Gondel der Windkraftanlage eingestellt. Die rein lokale Steuerung des Azimuts der Gondel ist jedoch unabhängig von der globalen Positionierung einer Windkraftanlage innerhalb eines Windparks. Außerdem kann die rein lokale Bestimmung des Azimuts mit Fehlern behaftet sein. Beides führt zu einem verminderten Energieertrag jeder einzelnen Windkraftanlage.

Aus der EP 2 169 218 A2 ist ein Verfahren bekannt, mit dessen Hilfe die Simulation eines Windfelds optimiert wird.

Aus der JP 2007-285214 A ist ein Verfahren zum Einstellen von Windkraftanlagen abhängig von externen Messwerten bekannt.

Aus der EP 1 460 266 A2 ist ein Verfahren bekannt, mit dessen Hilfe eine Windkraftanlage abhängig von optisch erfassten meteorologischen Messwerten eingestellt wird.

Aus der US 2010/0078940 A1 ist eine zentrale Steuerung für Windkraftanlagen bekannt. Bei der dort beschriebenen Windkraftanlage werden nur aktuelle Messdaten berücksichtigt.

Aus diesem Grunde lag dem Gegenstand die Aufgabe zugrunde, eine Windkraftanlagensteuereinrichtung sowie eine Windkraftanlage als auch ein Windparksteuerungssystem zur Verfügung zu stellen, bei welchem der Energieertrag des Gesamtwindparks optimiert ist.

Diese Aufgabe wird gegenständlich durch eine Steuereinrichtung nach Anspruch 1, eine Windkraftanlage nach Anspruch 7 sowie ein Windparksteuerungssystem nach Anspruch 8 gelöst.

Gegenständlich wird vorgeschlagen, dass neben der lokalen Überwachung der meteorologischen Messwerte auch eine räumlich von der Windkraftanlage entfernte Überwachung von meteorologischen Messwerten stattfindet.

Zusätzlich zu der Erfassung von externen meteorologischen Messwerten kann eine Topologie des Windparks erfasst werden. Weitere Messwerte, wie beispielsweise ein Wellenhub können ebenfalls erfasst werden. Zusätzlich können Prognosen zu Windgeschwindigkeiten erfasst werden. Durch die zumindest in Teilen räumliche Trennung der Erfassung der meteorologischen Messdaten von der jeweiligen Windkraftanlage ist es beispielsweise möglich, bei einem böigen Wind eine Windböe zu erfassen, bevor diese die jeweilige Windkraftanlage erreicht.

Somit sind mit den extern erfassten meteorologischen Messwerten optimierte Stellwerte für den Azimut einer jeden einzelnen Gondel bestimmbar. Hierzu werden die verschiedenen Messwerte einem Simulationsprogramm zugeführt. In dem Simulationsprogramm wird auch die Topologie des Windparks mit all seinen Windkraftanlagen nachgebildet ist. Mit Hilfe des Simulationsprogramms lassen sich z.B. Abschattungen einzelner Windkraftanlagen zueinander, turbulente Windströmungen, Scherwinde und dergleichen simulieren. Somit ist es möglich, für jede einzelne Windkraftanlage die Windverhältnisse zu simulieren. Die Simulation kann auf tatsächlichen Wetterdaten beruhen, oder auf simulierten Wetterdaten. Auch kann in die Simulation eine Wetterprognose einfließen.

Anhand der simulierten Windwerte an jeder einzelnen Windkraftanlage, die z.B. auch die Topologie des Windparks berücksichtigen, kann ein optimaler Azimut einer Gondel für jede einzelne Windkraftanlage errechnet werden.

Darüber hinaus können anhand von Messdaten, die räumlich von einer einzelnen Windkraftanlage entfernt gemessen wurden, Prognosen für eine Windrichtung im Bereich einer jeder einzelnen Windkraftanlage für eine Zeit von in wenigen Minuten bis in einigen Stunden bestimmt werden. Da das Verstellen der Gondel der Windkraftanlage Zeit in Anspruch nimmt, kann präemptiv der Azimut der Gondel verstellt werden, wenn anhand der Simulation sich ergibt, dass eine Gondel zu einem bestimmten Zeitpunkt in eine bestimmte Richtung weisen muss, um den Energieertrag zu optimieren.

Aus diesem Grunde wird gegenständlich vorgeschlagen, dass die Stelleinrichtung von außerhalb der Windkraftanlage einen abhängig von zumindest einem außerhalb der Windkraftanlage erfassten externen meteorologischen Messwert bestimmten externen Sollwert für den Stellwert empfängt. Das bedeutet, dass der Azimut der Gondel nicht oder nicht ausschließlich abhängig von dem lokal erfassten Stellwert, sondern abhängig von einem extern berechneten Sollwert eingestellt wird. Mit Hilfe dieses externen Sollwertes ist es möglich, externen Einflüssen auf den Energieertrag einer einzelnen Windkraftanlage Rechnung zu tragen und den Azimut der Gondel zu optimieren.

Zum Beispiel kann ein meteorologischer Messmast in einigen Kilometern Entfernung zu einem Windpark und/oder einer einzelnen Windkraftanlage aufgebaut sein. Dieser meteorologischen Messmast kann in unterschiedlichen Höhen Windgeschwindigkeiten messen. Beispielsweise bei einem böigen Wind kann eine Böe erfasst werden, bevor diese an der jeweiligen Windkraftanlage bzw. dem Windpark eintrifft. Mit Hilfe des Simulationsprogramms kann simuliert werden, ob der Energieertrag gesteigert werden kann, wenn die Windkraftanlage(n) in Richtung dieser Böe eingestellt wird (werden). Ist dies der Fall, kann ein Sollwert an die jeweilige(n) Windkraftanlage(n) übermittelt werden, so dass der Azimut deren Gondel im Voraus bereits in die Richtung eingestellt wird, die zu einem erhöhten Energieertrag führt, z.B. in die Richtung, aus der die Böe kommt. Trifft die Böe dann auf die Windkraftanlage, ist die Gondel bereits korrekt eingestellt, so dass ein optimierter Energieertrag erreicht werden kann. Wäre die Windkraftanlage lediglich lokal gesteuert, so könnte auf eine Böe nicht reagiert werden, da diese erst im Moment des Eintreffens erfasst würde und der Azimut nicht mehr rechtzeitig eingestellt werden könnte, um den Energieertrag zu erhöhen.

Bei der Berechnung, ob ein Azimut einer Gondel tatsächlich verändert wird, oder nicht, kann berücksichtigt werden, dass das Verfahren der Gondel ebenfalls Energie benötigt. Die Erhöhung des Energieertrags durch ein Verfahren der Gondel muss mindestens über dem Energiebedarf für das Verfahren liegen. Außerdem kann ein erhöhter Verschleiß durch das Verfahren der Gondel berücksichtigt werden. Der Gewinn an Energieertrag durch das Verfahren sollte auch den erhöhten Verschleiß des Motors kompensieren. Ansonsten kann ein Einstellen des Azimuts unterbleiben.

Ein anderes Beispiel für die Bestimmung eines externen Sollwertes kann in einer Abschattung einzelner Windkraftanlagen untereinander bestehen. Die Abschattung bei bestimmten Windverhältnissen, zum Beispiel bei aufsteigenden oder absteigenden Fall- oder Steigwinden, sowie Scherwinden können unterschiedlich sein. Diese Abschattungen können anhand des Simulationsprogramms berechnet werden und bei der Bestimmung des optimalen Azimuts für jede einzelne Windkraftanlage berücksichtigt werden. Der berechnete Azimut wird mit Hilfe des externen Sollwertes in die Windkraftanlage eingespeist und der Motor der Gondel wird entsprechend angetrieben, um die Gondel in den entsprechenden Azimut einzustellen.

Auch ist es möglich, dass beispielsweise das lokale Anemometer defekt ist und z.B. eine falsche Windrichtung oder eine falsche Windgeschwindigkeit anzeigt. In diesem Fall würde bei einer lokalen Steuerung die Windkraftanlage abhängig von dem lokalen Anemometer auf einen falschen Azimut eingestellt werden, was zu einem verminderten Energieertrag führte. Durch die Erfassung von externen meteorologischen Messwerten kann der Einfluss von Fehlmessungen von lokalen Anemometern reduziert werden, so dass aufgrund einer Vielzahl von Messwerten eine erhöhte Fehlertoleranz erreicht wird. Das bedeutet, dass bei Fehlmessungen einzelner Anemometer die Gesamtheit der Messwerte ausreichend gut ist, die einzelnen Windkraftanlagen optimal zu betreiben.

Gemäß einem vorteilhaften Ausführungsbeispiel wird vorgeschlagen, dass die Stelleinrichtung einen lokalen Sollwert abhängig von zumindest einem durch ein an der Windkraftanlage angeordnetes Anemometer erfassten lokalen meteorologischen Messwert errechnet. Wie bereits zuvor erläutert, kann lokal ein meteorologischer Messwert mittels z.B. eines Anemometers oder eines anderen Wetter- und/oder Windmessgeräts ermittelt werden. Dieser lokale meteorologische Messwert kann dazu dienen, einen lokalen Sollwert zu errechnen. In herkömmlicher Weise würde der lokale Sollwert dazu verwendet werden, den Azimut der Gondel einzustellen.

Es wird jedoch vorgeschlagen, dass der lokale Sollwert lediglich errechnet wird. Eine Steuerung erfolgt dann aber abhängig von einem externen Sollwert, auf den der lokal errechnete Sollwert Einfluss haben kann oder nicht. Jedoch ist die lokale Steuerung nicht ausschließlich abhängig von dem lokalen Sollwert.

Gemäß einem vorteilhaften Ausführungsbeispiel wird vorgeschlagen, dass die Stelleinrichtung derart eingerichtet ist, dass der externe Sollwert den lokalen Sollwert überregelt und dass der Stellwert abhängig von dem externen Sollwert ausgegeben wird. Somit ist es möglich, mit Hilfe einer zentralen Steuerung für jedes einzelne Windrad (Windkraftanlage, Windkraftgenerator, Windturbine) einen externen Sollwert vorzugeben und an die Windkraftanlage zu übermitteln. Die Windkraftanlagensteuereinrichtung empfängt diesen externen Sollwert und gibt den Stellwert abhängig hiervon aus. Dies bedeutet, dass die Einstellung des Azimuts der Gondel der Windkraftanlage abhängig von einem extern berechneten Sollwert ist. In diesen externen Sollwert können extern erfasste meteorologische Messwerte als auch lokale erfasste meteorologische Messwerte sowie lokal berechnete Sollwerte einfließen.

Es ist jedoch wichtig, dass nicht ausschließlich der lokale Sollwert für den Stellwert verantwortlich ist, sondern dass der lokale Sollwert durch den externen Sollwert ersetzt wird. Der lokal berechnete Sollwert kann durch die Windkraftanlagensteuereinrichtung errechnet werden und anschließend an eine zentrale Steuereinrichtung übertragen werden. In der zentralen Steuereinrichtung können alle lokal berechneten Sollwerte einlaufen. Außerdem können alle lokal gemessenen meteorologischen Messwerte einlaufen. Zusätzlich zu den an den Windkraftanlagen gemessene meteorologische Messwerte können meteorologischen Messwerte von meteorologischen Messmassen erfasst werden. Diese können beispielsweise auf verschiedenen Höhen angeordnete Windmesser enthalten. Außerdem können Bojen vorgesehen sein, an denen der Wellenhub messbar ist, der beispielsweise einen Einfluss auf Verwirbelungen im Abschattungsbereich einer Windkraftanlage haben kann.
Außerdem können in der zentralen Steuereinrichtung Informationen zu Wetterprognosen einlaufen, die dazu führen, dass die Sollwerte bereits vorgreiflich eines erwartenden Wetters eingestellt werden, so dass sobald Wind auf die Windkraftanlagen auftrifft, diese bereits richtig eingestellt sind.

Selbst wenn eine jede einzelne Windkraftanlage in der Woche nur 10 Minuten länger im Wind betrieben werden kann, als dies bei einer lokalen Steuerung möglich wäre, führt dies über die Lebensdauer eine Turbine zu einem erheblichen Mehrertrag und zu einer höhere Rentabilität jeder einzelnen Windkraftanlage.

Wie bereits erwähnt, wird gemäß einem vorteilhaften Ausführungsbeispiel vorgeschlagen, dass die Stelleinrichtung einen lokalen Sollwert aussendet. Somit ist es möglich, dass in der zentralen Steuereinrichtung jeder einzelne lokale Sollwert empfangen wird und in die Berechnung eines optimierten externen Sollwertes fließen kann.

Gemäß einem vorteilhaften Ausführungsbeispiel wird vorgeschlagen, dass der Stellwert zusätzlich den Pitch der Windkraftanlage bestimmt und dass der lokale und der externe Sollwert zusätzlich den Pitch bestimmen. Der Pitch kann die Einstellung des Rotorblatts bedeuten. Bei der Einstellung des Pitches ist es möglich, dass dieser abhängig von der Windgeschwindigkeit optimiert wird, so dass die Drehgeschwindigkeit des Windrads optimiert wird. Auch ist es möglich, dass während einer einzelnen Umdrehung eines Windrads der Pitch verändert wird, so dass z.B. bei Scherwinden oder auf-/absteigenden Winden der Energieertrag optimiert werden kann. Vorzugsweise wird der Pitch jedoch für eine Dauer von mehr als einer Umdrehung eingestellt.

Ein weiterer Aspekt ist eine Windkraftanlage mit einer Windkraftanlagensteuereinrichtung wie sie zuvor beschrieben wurde.

Darüber hinaus ist ein weiterer Aspekt ein Windparksteuerungssystem mit zumindest zwei räumlich getrennt von einer Windkraftanlage angeordneten meteorologischen Messstationen, einem zentralen Steuerrechner und zumindest einer Windkraftanlage, wobei die meteorologische Messstation meteorologische Messdaten an den zentralen Steuerrechner übermittelt, der zentrale Steuerrechner aus zumindest den von den meteorologischen Messstationen empfangenen meteorologischen Messdaten einen Sollwert für ein Azimut einer Gondel der Windkraftanlage bestimmt, und die Windkraftanlage den Azimut ihrer Gondel abhängig von dem Sollwert einstellt.

Dabei wird vorzugsweise das Windparksteuerungssystem so betrieben, dass meteorologische Messdaten empfangen werden, dass zumindest anhand der empfangenen meteorologischen Messdaten ein externer Sollwert für eine jeweilige Windkraftanlage errechnet wird und dass der externe Sollwert an die jeweilige Windkraftanlage übermittelt wird, so dass die jeweilige Windkraftanlage abhängig von dem externen Sollwert den Azimut ihrer Gondel einstellt.

Bei einer Berechnung des externen Sollwertes kann ein lokal an einer Windkraftanlage errechneter lokaler Sollwert berücksichtigt werden. Auch ist es möglich, dass ein meteorologischer Messwert, der lokal an einer Windkraftanlage bestimmt wurde, berücksichtigt wird. Jedoch ist der Sollwert für die Einstellung der Gondel nicht ausschließlich abhängig von den lokalen Mess- und Sollwerten, sondern auch abhängig von externen Mess- und Sollwerten.

Zur Berechnung des optimalen Azimuts für jede einzelne Windkraftanlage kann eine Topologie eines Windparks mit einer Mehrzahl von Windkraftanlagen, beispielsweise mehr als zwei Windkraftanlagen, vorzugsweise mehr als 20 Windkraftanlagen, in ein Simulationsprogramm eingespeist werden. Mittels finiten Elementen kann die Windströmung innerhalb des Windparks an jedem einzelnen Punkt berechnet werden. Für die Berechnung des Strömungsverhaltens können externe Daten hinzugezogen werden, wie extern des Windparks erfasste Windgeschwindigkeiten. Auch können externe Daten simuliert werden, so dass die Strömungen im Windpark für unterschiedliche äußere Bedingungen im Vorhinein berechnet werden können. Anschließend kann mit momentan gemessenen Messwerten sowie momentanen Wetterprognosen eine Optimierung jedes einzelnen Azimuts folgen, indem berechnet wird, bei welchen Azimut jeder einzelnen Windkraftanlage des Windparks unter Berücksichtigung von Abschattung, Windrichtung, Windgeschwindigkeit und dergleichen der gesamte Windpark einen optimalen Energieertrag erbringt. Mit Hilfe des so bestimmten Sollwertes kann in jeder einzelnen Windkraftanlage der Azimut der Gondel engestellt werden. Das bedeutet, dass mittels des Simulationsprogramms für jede einzelne Windkraftanlage ein optimierter Azimut errechnet wird und als externer Sollwert an die Windkraftanlage übermittelt wird.

Durch das beschriebene Verfahren ist es möglich, lokale Messfehler auszugleichen und zu verhindern, dass lokale Messfehler zu einem verringerten Energieertrag einer einzelnen Windkraftanlage führen. Die lokalen Messungen können Einfluss in den externen Sollwert nehmen, bestimmen diesen jedoch nicht ausschließlich. Wird in einer einzelnen Windkraftanlage eine Fehlmessung durchgeführt, kann diese Fehlmessung durch Messungen in anderen Windkraftanlagen ausgeglichen werden, so dass der Energieertrag einer einzelnen Windkraftanlage bzw. des gesamten Windparks trotz fehlerhafter lokaler Messung optimiert ist.

Gemäß einem vorteilhaften Ausführungsbeispiel wird vorgeschlagen, dass die zentrale Steuereinrichtung meteorologische Messdaten von der Windkraftanlage empfängt und die Sollwerte zusätzlich abhängig von den meteorologischen Messdaten der Windkraftanlage bestimmt. Wie bereits erläutert, können die lokalen Messwerte verwendet werden, um den externen Sollwert zu bestimmen. Da jedoch eine Vielzahl von lokalen Messwerten in die Bestimmung des externen Sollwertes einfließen, wird die Fehlerwahrscheinlichkeit für den Sollwert minimiert.

Gemäß einem Ausführungsbeispiel wird vorgeschlagen, dass die meteorologische Messstation zumindest ein Anemometer und oder eine Wellenhubmesseinrichtung umfassen.

Erfindungsgemäß wird vorgeschlagen, dass die zentrale Steuereinrichtung meteorologische Prognosen empfängt und den Sollwert zusätzlich abhängig von der Prognose berechnet. Eine Prognose kann z.B. dahin lauten, dass in beispielsweise einer Stunde Wind aus einer bestimmten Windrichtung erwartet wird. Bei Flaute sind die Windkraftanlagen aber zufällig in eine bestimmte Richtung ausgerichtet. Wird nun erwartet, dass Wind aus einer bestimmten Windrichtung kommt, kann präemptiv der Azimut der Gondel so eingestellt werden, dass diese für die erwartete Windrichtung optimiert eingestellt ist. Ist in der Prognose auch die Windgeschwindigkeit enthalten, kann der Pitch der Windkraftanlage ebenfalls korrekt eingestellt werden. Tritt dann der erwartete Wind auf, ist die Windkraftanlage bereits optimal eingestellt und ein Energieertrag kann unmittelbar erreicht werden.

Anders wäre dies bei einer lokalen Messung, da die Windkraftanlage zunächst in den richtigen Azimut eingestellt werden müsste, was einige Minuten dauern kann. Diese wenigen Minuten führen zu einer Verminderung des Energieertrags und somit zu einer Verminderung der Rendite einer jeden einzelnen Windkraftanlage als auch des Windparks.

Wenn die meteorologischen Prognosen mit meteorologischen Messwerten, die von meteorologischen Messstationen erfasst werden, die extern von den Windkraftanlagen aufgestellt sind, verglichen werden, lässt sich der Azimut präemptiv weiter verbessern. So kann mittels einiger Kilometer von dem Windpark entfernt aufgestellten meteorologischen Messmasten erfasst werden, ob die Prognosen zutreffen und der erwartete Wind tatsächlich auftritt. Wird an den meteorologischen Messmasten der Wind gemessen, kann eine Feinjustage des Azimuts als auch des Pitches erfolgen, indem mittels des Simulationsprogramms ein optimierter Pitch und ein optimierter Azimut berechnet wird. Die Windkraftanlage kann dann bereits optimiert eingestellt werden, so dass, wenn der Wind auf die jeweilige Windkraftanlage auftrifft, diese bereits mit dem optimalen Azimut und dem optimalen Pitch eingestellt ist.

Gemäß einem vorteilhaften Ausführungsbeispiel wird vorgeschlagen, dass die zentrale Steuereinrichtung eine Anzahl von Fehlersignalen einer jeweiligen Windkraftanlage erfasst und bei einem Überschreiten eines Schwellwertes durch die Anzahl der Fehlersignale ein Wartungssignal ausgibt. Mit Hilfe dieses Wartungssignals ist es möglich, lokale Fehlmessungen leichter zu detektieren.

Weicht der lokal gemessene Sollwert regelmäßig von dem externen Sollwert ab, kann dies auf eine Fehlmessung mit dem lokalen Anemometer deuten. Eine Abweichung kann dann angenommen werden, wenn ein Abstand der Werte ein Mindestmaß übersteigt oder die prozentuale Abweichung der Werte ein Mindestmaß übersteigt. Wenn eine solche Abweichung häufig auftritt, spricht vieles dafür, dass lokal eine Fehlmessung auftritt. Mit Hilfe des Wartungssignals ist es möglich, eine Wartung des lokalen Anemometers anzustoßen, um die lokalen Fehlmessungen zu beheben.

Die zuvor genannten Verfahren können auch als Computerprogramm oder als auf einem Speichermedium gespeichertes Computerprogramm realisiert werden. Hierbei kann windkraftanlagenseitig oder zentralseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale und Teilmerkmale der Beschreibung und/oder der abhängigen sowie unabhängigen Ansprüche, auch unter vollständiger oder teilweiser Umgehung von Merkmalen oder Teilmerkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine schematische Draufsicht auf eine Windkraftanlage;
- Fig. 2: eine schematische Ansicht einer Windkraftanlage;
- Fig. 3: eine schematische Draufsicht auf eine Topologie eines Windparks;
- Fig. 4: eine Simulation eines Abschattungsbereichs innerhalb eines Windparks;
- Fig. 5: eine Darstellung eine präemptiven Einstellung eines Azimuts;
- Fig. 6: eine Darstellung des lokalen Fehlers innerhalb eines Windparks;
- Fig. 7: eine schematische Darstellung einer Windkraftanlagensteuereinrichtung.

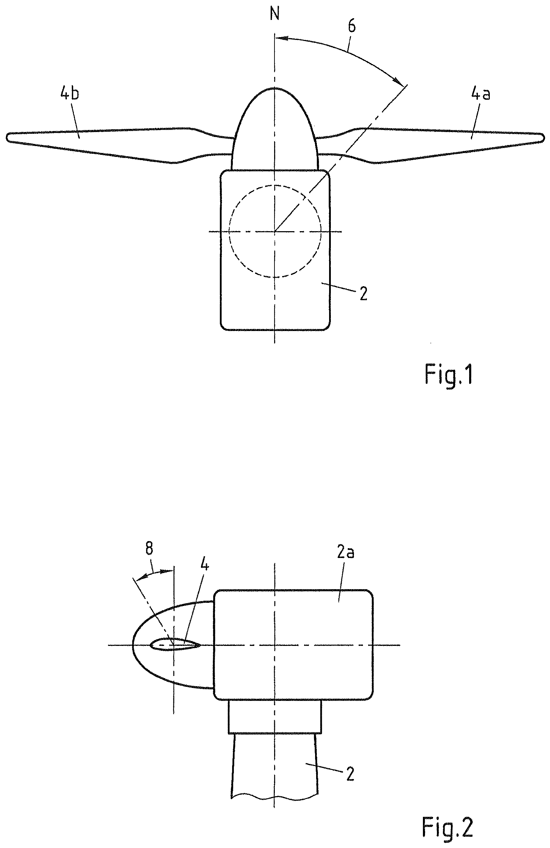

Fig. 1 zeigt eine schematische Draufsicht auf eine Gondel einer Windkraftanlage 2. An der Gondel sind Rotorblätter 4a, 4b angeordnet. Ferner ist in der Fig. 1 gezeigt, dass die Gondel der Windkraftanlage 2 um 360° drehbar um den Winkel 6 angeordnet ist. Der Winkel 6 wird auch als Azimut 6 der Windkraftanlage 2 bezeichnet. Beispielsweise kann der Winkel 6 einen Drehwinkel relativ zur Himmelsrichtung Nord darstellen. Ein Azimut 6 von 180° bedeutete dann beispielsweise, dass die Windkraftanlage 2 in Richtung Süden ausgerichtet wäre.

Fig. 2 zeigt die Gondel 2a der Windkraftanlage 2 an der die Rotorblätter 4 angeordnet sind. Zu erkennen ist, dass jedes Rotorblatt 4 in einem Winkel 8, der den Pitch des Rotorblatts 4 angibt, verschwenkt werden kann. Mit Hilfe des Winkels 8 kann der Pitch des Rotorblatts 4 eingestellt und somit die Anströmfläche des Windes auf das Rotorblatt 4 beeinflusst werden.

Der Energieertrag einer Windkraftanlage 2 ist optimal, wenn der Azimut 6 und der Pitch 8 auf die an der Anlage vorherrschenden Windverhältnisse eingestellt ist. Es ist vorteilhaft, wenn der Azimut 6 in Windrichtung zeigt und der Pitch 8 abhängig von der Windgeschwindigkeit eingestellt ist.

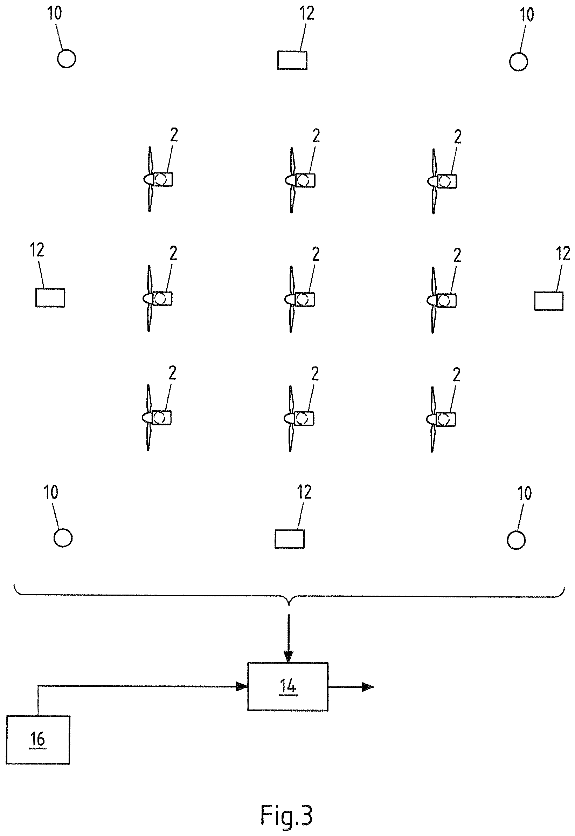

Innerhalb eines Windparks, wie er beispielsweise in Fig. 3 dargestellt ist, sind eine Vielzahl von Windkraftanlagen 2 angeordnet. Die gezeigte Anordnung ist rein schematisch.

Um die Windkraftanlagen 2 herum können meteorologische Messmasten 10 angeordnet sein. Diese sind vorzugsweise in einigen hundert Metern bis einigen Kilometern entfernt von den am äußeren Rand des Windparks angeordneten Windkraftanlagen 2 angeordnet. Ferner können Messbojen 12 vorgesehen sein, die ebenfalls entfernt von den Windkraftanlagen 2 oder auch innerhalb der Windkraftanlagen 2 angeordnet sein können.

Jede einzelne Windkraftanlage 2 misst mit einem lokalen Windmesser, z.B. einem Anemometer, die lokale Windrichtung als auch die lokale Windgeschwindigkeit. Diese lokalen meteorologischen Messdaten werden von der Windkraftanlage 2 an eine zentrale Steuereinrichtung 14 übermittelt. Ferner kann in jeder einzelnen Windkraftanlage 2 anhand der lokalen meteorologischen Messdaten ein Sollwert für den Stellwert des Azimuts 6 und des Pitches 8 errechnet werden. Auch diese jeweils lokale errechneten Sollwerte können von jeder Windkraftanlage 2 an die zentrale Steuereinrichtung 14 übermittelt werden. Eine Übermittlung kann dabei über Mobilfunk, Richtfunk, Ethernet oder dergleichen erfolgen.

Neben den lokalen meteorologischen Messdaten, die an den jeweiligen Windkraftanlagen 2 gemessen werden, misst jeder meteorologische Messmast 10 ebenfalls meteorologische Messdaten, beispielsweise Windgeschwindigkeit und Windrichtung. Dies kann in verschiedenen Höhen, beispielsweise in Höhen von 10, 20, 50, 100 und 200 Meter erfolgen. Diese Angabe der Höhen ist rein beispielhaft.

Die jeweiligen an den meteorologischen Messmasten 10 erfassten meteorologischen Messwerte werden ebenfalls an die zentrale Steuereinrichtung 14 übermittelt.

Abschließend können Welleninformationen, die mittels der Bojen 12 ermittelt werden, ebenfalls als meteorologische Messdaten an die zentrale Steuereinrichtung 14 übertragen werden.

In der zentralen Steuereinrichtung 14 kann mit den empfangenen meteorologischen Messdaten errechnet werden, wie die Windverhältnisse an jeder einzelne Windkraftanlage 2 sind. Dabei kann in der zentralen Steuereinrichtung 14 das Strömungsverhalten innerhalb des Windparks simuliert werden. Bei dieser Simulation können nicht nur die lokalen meteorologischen Messdaten verwendet werden, sondern auch die Topologie des Windparks, insbesondere die Positionierung der einzelnen Windkraftanlagen 2 zueinander. Auch geographische Gegebenheiten innerhalb des Windparks können berücksichtigt werden. Bei der Simulation ist es möglich, die Windverhältnisse an jeder einzelnen Windkraftanlage 2 zu berechnen.

Diese Berechnung basiert auf der Vielzahl der meteorologischen Messdaten. Anhand des simulierten Strömungsmusters an jeder einzelnen Windkraftanlage 2 kann in der zentralen Steuereinrichtung 14 ein externer Sollwert für Azimut 6 und Pitch 8 für jede einzelne Windkraftanlage 2 errechnet werden.

Auch kann simuliert werden, wie sich die Windverhältnisse verändern, wenn die Stellwerte der Windkraftanlagen 2 verändert würden. Dies ermöglicht die Berechnung der optimalen Stellwerte, die zu einem maximalen Energieertrag des Windparks führen. Diese Stellwerte werden dann als externe Sollwerte an die jeweiligen Windkraftanlagen 2 übermittelt.

Durch die Verwendung der Vielzahl der meteorologischen Daten ist die Simulation 14 in der Regel unanfälliger gegenüber Fehlern, als eine rein lokale Bestimmung eines Sollwerts eines Azimuts 6 und Pitches 8. Wenn ein lokaler Messwert fehlerhaft ist, z.B. aufgrund eines Messfehlers, würde ein rein lokal errechneter Sollwert auf nur diesem fehlerhaften Messwert beruhen und Pitch 8 als auch Azimut 6 an der jeweiligen Windkraftanlage 2 wären mit hoher Wahrscheinlichkeit nicht optimal. Außerdem kann eine lokale Bestimmung von Azimut 6 und Pitch 8 nicht die Topologie des Windparks berücksichtigen, insbesondere nicht Abschattungsphänomene der einzelnen Windkraftanlagen 2 untereinander, die auch abhängig von der jeweiligen Windrichtung sind.

Die in der zentralen Steuereinrichtung 14 errechneten Sollwerte werden für jede einzelne Windkraftanlage 2 an diese übertragen. Azimut 6 und Pitch 8 jeder einzelnen Windkraftanlage 2 wird dann anhand der externen in der zentralen Steuereinrichtung 14 errechneten Sollwerte eingestellt.

Neben den meteorologischen Messwerten kann in der zentralen Steuereinrichtung 14 eine Wetterprognose aus einer Wetterdatenbank entnommen werden. Mit Hilfe der Wetterprognose ist es möglich, die Sollwerte für Azimut 6 und Pitch 8 so zu berechnen, dass in dem Moment, wenn die Prognose eintrifft, Azimut 6 und Pitch 8 der jeweiligen Windkraftanlage 2 optimiert eingestellt ist.

Eine Optimierung von Pitch 8 als auch Azimut 6 erfolgt dahingehend, dass der Energieertrag einer einzelnen Windkraftanlage 2 und/oder des Gesamtwindparks der Vielzahl der Windkraftanlagen 2 maximiert ist. So lässt sich mit Hilfe eines Simulationsprogramms berechnen, wie sich der Energieertrag bei einer Veränderung von Azimut 6 und Pitch 8 jeder einzelnen Windkraftanlage 2 ändert. Somit kann errechnet werden, wann der Maximalwert des Energieertrags erreicht ist, d.h. bei welcher Einstellung von Azimut 6 und Pitch 8 jeder einzelnen Windkraftanlage 2 dieser erreicht ist. Entsprechende externe Sollwerte werden dann an die jeweiligen Windkraftanlagen 2 übermittelt.

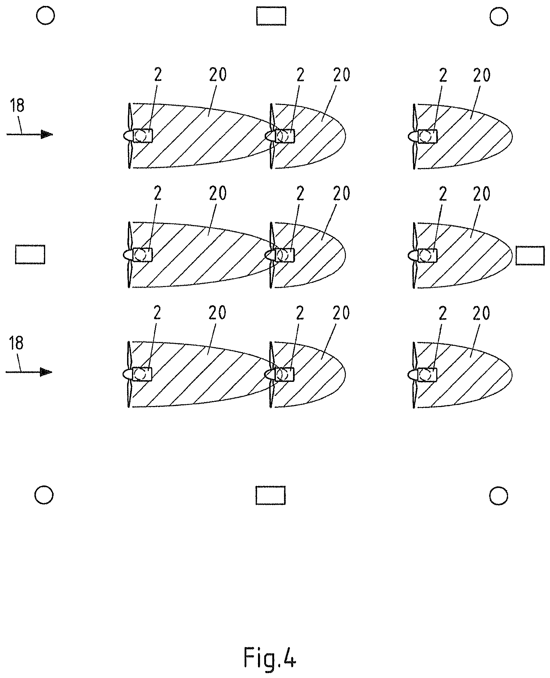

Fig. 4 zeigt beispielhaft die Abschattung der einzelnen Windkraftanlagen 2 untereinander bei einer bestimmten Windrichtung. Zu erkennen ist, dass Wind z.B. aus der Windrichtung "West" 18 auf den Windpark auftrifft. Dabei lässt sich erkennen, dass die jeweils in der linken Spalte angeordneten Windkraftanlagen 2 einen Windschatten werfen, der gegebenenfalls einer Abschattung der in der mittleren Spalte angeordneten Windkraftanlagen 2 bewirkt. In der Fig. 4 ist dies durch die im Windschatten der Windkraftanlagen 2 gezeigten markierten Abschattungsbereiche 20 dargestellt.

Die Abschattungsbereiche 20 lassen sich in dem Simulationsprogramm errechnen. Diese sind nicht nur abhängig von der Windrichtung, sondern auch von der Windstärke als auch von beispielsweise einem Wellengang oder auch von steigenden oder fallenden Winden, sowie von Scherwinden. Alle diese Faktoren tragen dazu bei, dass der Abschattungsbereich 20 unterschiedlich sein kann. Außerdem verändern sich die Abschattungsbereiche 20 bei veränderten Einstellungen von Azimut 6 und Pitch 8.

Durch die gegenständliche externe Berechnung des Sollwertes können die Abschattungsbereiche 20 bei der Einstellung von Azimut 6 und Pitch 8 berücksichtigt werden, so dass jede einzelne Windkraftanlage 2 mit einem optimierten Wert für Azimut 6 und Pitch 8 eingestellt wird, so dass der Energieertrag des Windparks bei gegebenen Wetterverhältnissen maximal ist.

In dem gezeigten Beispiel werden die in der mittleren Spalte angeordneten Windkraftanlagen 2 nahezu vollständig durch die in der linken Spalte angeordneten Windkraftanlagen 2 abgeschattet. Mit Hilfe des Simulationsprogramms ist es möglich, zu simulieren, ob die Abschattungsbereiche 20 der Windkraftanlagen 2 in der linken Spalte so beeinflusst werden können, dass diese nicht mehr vollständig die Windkraftanlagen 2 in der mittleren Spalte abdecken. So ist es beispielsweise denkbar, dass sich bei einem leichten Verdrehen der Windkraftanlagen 2 in der linken Spalte in Uhrzeigersinn um 20° bis 40° die Abschattungsbereiche 20 verändern und die Windkraftanlagen 2 in der mittleren Spalte vollständig von Wind umströmt werden. Dies führte zu einem erhöhten Energieertrag des Gesamtwindparks, auch wenn die Windkraftanlagen 2 in der linken Spalte einen etwas geringeren Ertrag hätten.

Mit Hilfe des gegenständlichen Verfahrens lässt sich simulieren, bei welcher Einstellung für jede einzelne Windkraftanlage 2 der Gesamtwindpark einen optimalen Energieertrag bringt.

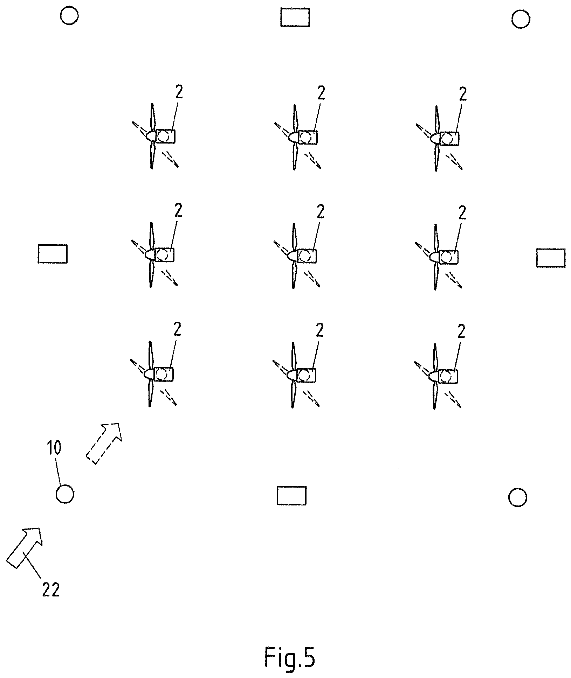

Fig. 5 zeigt den Einsatz eines Messmasten zur Optimierung des Energieertrags. Zu erkennen ist, dass z.B. die Windkraftanlagen 2 zu einem bestimmten Zeitpunkt alle gleich ausgerichtet sind. Dies ist durch die durchgezogenen Linien für die Rotorblätter 4 angedeutet. Wenn mit einem meteorologischen Messmast 10 eine Windböe 22 erfasst wird, kann im Vorhinein, d.h. bevor die Windböe 22 die Windkraftanlagen 2 trifft, berechnet werden, wie der Azimut 6 als auch der Pitch 8 der Windkraftanlagen 2 eingestellt werden muss, um die entsprechende Windböe 22 "zu ernten".

Die mögliche Einstellung ist beispielhaft durch die gestrichelten Linien der Rotorblätter 4 an den Windkraftanlagen 2 dargestellt. Bis die Böe 22 auf die Windkraftanlagen 2 auftrifft, können einige Minuten vergehen, da der meteorologische Messmast 10 vorzugsweise einige Kilometer außerhalb des Windparks aufgestellt ist. Der Azimut 6 der Windkraftanlagen 2 lässt sich somit so einstellen, dass deren Azimut 6, wie mit den gestrichelten Linien der Rotorblätter 4 angedeutet, eingestellt ist. Trifft dann die Windböe 22 auf die Windkraftanlagen 2, sind diese bereits optimiert eingestellt und können unmittelbar Strom erzeugen.

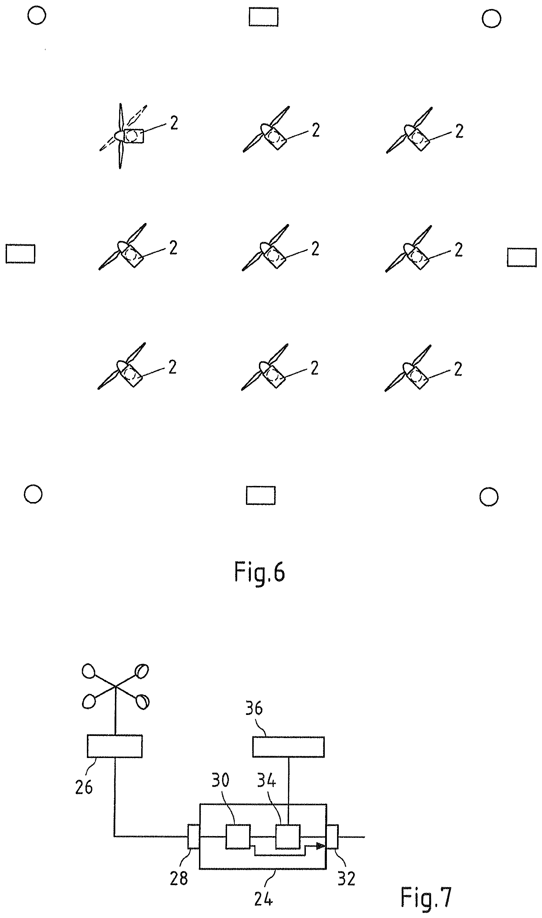

Fig. 6 zeigt ein Beispiel, bei dem eine lokale Bestimmung eines Sollwertes für den Azimut 6 zu einer Fehleinstellung einer Windkraftanlage führen kann. Zu erkennen ist, dass die Windkraftanlage 2 links oben in einer anderen Richtung ausgerichtet ist, als der Rest der Windkraftanlagen 2. Diese Fehlausrichtung kann darin begründet sein, dass in dieser falsch ausgerichteten Windkraftanlage 2 eine fehlerhafte lokale Messung der Windrichtung erfolgt ist.

Mit Hilfe des externen Sollwertes lässt sich der Azimut 6 der Windkraftanlage 2 links oben verändern, so dass die Rotorblätter 4, wie mit den gestrichelten Linien dargestellt, eingestellt sind. Ein lokaler Messfehler kann somit überregelt werden und die Fehlertoleranz des Gesamtsystems erhöht werden.

Fig. 7 zeigt eine lokale Windkraftanlagensteuereinrichtung 24. An die Steuereinrichtung 24 ist ein Anemometer 26 angeschlossen, das vorzugsweise an der Spitze des Turms einer jeden Windkraftanlage 2 angeordnet ist. Dieses Anemometer 26 liefert lokale Messwerte von Windgeschwindigkeit und Windrichtung an die Schnittstelle 28. Die lokalen Messwerte werden dazu verwendet, um in den Mikroprozessor 30 einen lokalen Sollwert für einen Stellwert des Azimuts 6 der Gondel 2a zu errechnen. Dieser lokale Sollwert wird gegenständlich jedoch unmittelbar über die Schnittstelle 32 an den zentralen Steuerrechner 14 übermittelt.

Von dem zentralen Steuerrechner 14 wird über die Schnittstelle 32 ein externer Sollwert empfangen. Dieser externe Sollwert wird an die Stelleinrichtung 34 übergeben. Die Stelleinrichtung 34 gibt einen Stellwert an einen Motor 36 der Gondel 2a der Windkraftanlage 2 aus. Der Stellwert bestimmt, wie der Motor 36 angesteuert wird, um den Azimut 6 der Gondel 2a auf den Sollwert einzustellen. Eine nicht dargestellte Einstellung des Pitches 8 kann ebenfalls über die Stelleinrichtung 34 durch Ausgabe eines entsprechenden Stellwerts erfolgen.

Mit Hilfe der gezeigten Steuerung eines Windparks lässt sich dessen Energieertrag optimieren. Durch Berücksichtigung der Topologie des Windparks als auch externer meteorologischer Messdaten lässt sich für jedes einzelne Windrad eine optimierte Einstellung von Azimut und Pitch erreichen. Die Fehlertoleranz gegenüber lokalen Messfehlern wird vergrößert, da eine Vielzahl von Messwerten für die Bestimmung eines Sollwertes berücksichtigt werden.

## Patentansprüche

1. Windkraftanlagensteuereinrichtung mit
- einer Stelleinrichtung (34) zum Ausgeben eines zumindest einen Azimut einer Gondel (2a) der Windkraftanlage (2) bestimmenden Stellwerts,
**dadurch gekennzeichnet,**
- **dass** die Stelleinrichtung (34) von außerhalb der Windkraftanlage (2) einen abhängig von zumindest einem außerhalb der Windkraftanlage (2) erfassten externen meteorologischen Messwert und einer meteorologischen Prognose bestimmten externen Sollwert für den Stellwert empfängt.

2. Windkraftanlagensteuereinrichtung nach Anspruch 1,
**dadurch gekennzeichnet, dass** die Stelleinrichtung (24) einen lokalen Sollwert abhängig von zumindest einem durch ein an der Windkraftanlage (2) angeordnetes Windmessgerät (26), insbesondere einem Anemometer, erfassten lokalen meteorologischen Messwert berechnet.

3. Windkraftanlagensteuereinrichtung nach Anspruch 2,
**dadurch gekennzeichnet, dass** die Stelleinrichtung (34) derart eingerichtet ist, dass der externe Sollwert den lokalen Sollwert überregelt und dass der Stellwert abhängig von dem externen Sollwert ausgegeben wird.

4. Windkraftanlagensteuereinrichtung nach einem der Ansprüche 2 oder 3, **dadurch gekennzeichnet, dass** die Stelleinrichtung (34) eine Abweichung des lokalen Sollwerts von dem externen Sollwert erfasst und abhängig von der Abweichung ein Fehlersignal aussendet.

5. Windkraftanlagensteuereinrichtung nach einem der Ansprüche 2 bis 4, **dadurch gekennzeichnet, dass** die Stelleinrichtung (34) den lokalen Sollwert aussendet.

6. Windkraftanlagensteuereinrichtung nach einem der Ansprüche 2 bis 5, **dadurch gekennzeichnet, dass** der Stellwert (34) zusätzlich den Pitch der Windkraftanlage (2) bestimmt und dass der lokale und der externe Sollwert zusätzlich den Pitch bestimmen.

7. Windkraftanlage (2) mit einer Windkraftanlagensteuereinrichtung (24) nach Anspruch 1.

8. Windparksteuerungssystem mit
- zumindest zwei räumlich getrennt von einer Windkraftanlage (2) angeordneten meteorologischen Messstationen (10),
- einem zentralen Steuerrechner (14) und
- zumindest einer Windkraftanlage nach Anspruch 7, wobei
- die meteorologischen Messstationen (10) meteorologische Messdaten an den zentralen Steuerrechner (14) übermitteln,
- der zentrale Steuerrechner (14) aus zumindest den von den meteorologischen Messstationen empfangenen meteorologische Messdaten und einer meteorologischen Prognosen einen Sollwert für einen Azimut einer Gondel der Windkraftanlage (2) bestimmt, und
- die Windkraftanlage (2) den Azimut ihrer Gondel abhängig von dem Sollwert einstellt.

9. Windparksteuerungssystem nach Anspruch 8, **dadurch gekennzeichnet, dass** der zentrale Steuerrechner (14) meteorologische Messdaten von der Windkraftanlage (2) empfängt und die Sollwert zusätzlich abhängig von den meteorologischen Messdaten der Windkraftanlage (2) bestimmt.

10. Windparksteuerungssystem nach Anspruch 8 oder 9, **dadurch gekennzeichnet, dass** die meteorologischen Messstationen (10) zumindest ein Anemometer und/oder eine Wellenhubmesseinrichtung umfassen.

11. Windparksteuerungssystem nach einem der Ansprüche 8 bis 10, **dadurch gekennzeichnet, dass** die zentrale Steuereinrichtung (14) eine Anzahl von Fehlersignalen eine jeweiligen Windkraftanlage (2) erfasst und bei einem Überschreiten eines Schwellwertes durch die Anzahl der Fehlersignale ein Wartungssignal ausgibt.

12. Verfahren zum Betreiben einer Windkraftanlage mit einer Windkraftanlagensteuereinrichtung gemäß einem der Ansprüche 1-6 umfassend
- Empfangen eines abhängig von zumindest einem außerhalb der Windkraftanlage (2) erfassten externen meteorologischen Messwert und einer meteorologischen Prognose bestimmten externen Sollwert für einen Stellwert für einen Azimut der Gondel von außerhalb der Windkraftanlage (2),
- Einstellen zumindest des Azimut der Gondel (2a) der Windkraftanlage (2) abhängig von dem Stellwert.

## Claims

1. Wind turbine control device with
- a setting device (34) for outputting a setpoint value which determines at least one azimuth of a nacelle (2a) of the wind turbine (2),
**characterised in that**
- the setting device (34) receives, from outside the wind turbine (2), an external target value for the setpoint value determined dependent on at least one external meteorological measured value recorded outside the wind power turbine (2) and one meteorological forecast.

2. Wind turbine control device according to Claim 1, **characterised in that** the setting device (24) calculates a local target value dependent on at least one local meteorological measured value recorded by a wind measuring device (26), in particular an anemometer, arranged on the wind turbine (2).

3. Wind turbine control device according to Claim 2, **characterised in that** the setting device (34) is arranged such that the external target value overrides the local target value and that the setpoint value is output depending on the external target value.

4. Wind turbine control device according to any one of Claims 2 or 3, **characterised in that** the setting device (34) records a deviation of the local
target value from the external target value and emits an error signal depending on the deviation.

5. Wind turbine control device according to any one of Claims 2 to 4, **characterised in that** the setting device (34) emits the local target value.

6. Wind turbine control device according to any one of Claims 2 to 5, **characterised in that** the setpoint value (34) additionally determines the pitch of the wind turbine (2) and that the local and the external target value additionally determine the pitch.

7. Wind turbine (2) with a wind turbine control device (24) according to Claim 1.

8. Wind farm control system with
- at least two meteorological measuring stations (10) arranged spatially separately from a wind turbine (2),
- one central control computer (14) and
- at least one wind turbine according to Claim 7, whereby
- the meteorological measuring stations (10) transmit meteorological measured data to the central control computer (14),
- the central control computer (14) determines a target value for an azimuth of a nacelle of the wind turbine (2), from at least the meteorological measured data received from the meteorological measuring stations and a meteorological forecast, and
- the wind turbine (2) adjusts the azimuth of its nacelle in accordance with the target value.

9. Wind farm control system according to Claim 8, **characterised in that** the central control computer (14) receives meteorological measurement data from the wind turbine (2) and determines the target value additionally depending on the meteorological measured data of the wind turbine (2).

10. Wind farm control system according to Claim 8 or 9, **characterised in that** the meteorological measuring stations (10) comprise at least one anemometer and/or one wave height measurement device.

11. Wind farm control system according to any one of Claims 8 to 10, **characterised in that** the central control device (14) records a number of error signals of a respective wind turbine (2) and when a threshold value is exceeded by the number of error signals outputs a maintenance signal.

12. Method for operating a wind turbine with a wind turbine control device according to any one of Claims 1-6 comprising
- receiving an external target value, which is determined dependent on at least one external meteorological measured value recorded outside the wind power plant (2) and one meteorological forecast, for a setpoint value for an azimuth of the nacelle outside the wind turbine (2),
- adjusting at least the azimuth of the nacelle (2a) of the wind turbine (2) depending on the setpoint value.

## Revendications

1. Dispositif de commande d'installation éolienne comprenant :
- un dispositif de réglage (34) servant à fournir une valeur de réglage déterminant au moins un azimut d'une nacelle (2a) de l'installation éolienne (2), **caractérisé**
- **en ce que** le dispositif de réglage (34) reçoit, de l'extérieur de l'installation éolienne (2), pour la valeur de réglage, une valeur théorique externe définie en fonction au moins d'une valeur mesurée météorologique externe collectée à l'extérieur de l'installation éolienne (2) et en fonction d'une prévision météorologique.

2. Dispositif de commande d'installation éolienne selon la revendication 1, **caractérisé en ce que** le dispositif de réglage (24) calcule une valeur théorique locale en fonction au moins d'une valeur mesurée météorologique locale collectée par un appareil de mesure de la vitesse du vent (26), en particulier un anémomètre, disposé sur l'installation éolienne (2).

3. Dispositif de commande d'installation éolienne selon la revendication 2, **caractérisé en ce que** le dispositif de réglage (34) est agencé de manière telle, que la valeur théorique externe surrégule la valeur théorique locale, et **en ce que** la valeur de réglage soit fournie en fonction de la valeur théorique externe.

4. Dispositif de commande d'installation éolienne selon l'une des revendications 2 ou 3, **caractérisé en ce que** le dispositif de réglage (34) détecte un écart de la valeur théorique locale par rapport à la valeur théorique externe et, en fonction de l'écart, envoie un signal d'erreur.

5. Dispositif de commande d'installation éolienne selon l'une quelconque des revendications 2 à 4, **caractérisé en ce que** le dispositif de réglage (34) envoie la valeur théorique locale.

6. Dispositif de commande d'installation éolienne selon l'une quelconque des revendications 2 à 5, **caractérisé en ce que** la valeur de réglage (34) détermine en outre le pas de l'installation éolienne (2), et **en ce que** la valeur théorique locale et la valeur théorique externe déterminent en outre le pas.

7. Installation éolienne (2) comprenant un dispositif de commande (24) de l'installation éolienne selon la revendication 1.

8. Système de commande d'un parc éolien comprenant :
- au moins deux stations de mesure météorologiques (10) disposées en étant physiquement séparées d'une installation éolienne (2),
- un ordinateur de commande central (14) et
- au moins une installation éolienne selon la revendication 7,
- où les stations de mesure météorologiques (10) transmettent des données de mesure météorologiques à l'ordinateur de commande central (14),
- où l'ordinateur de commande central (14) détermine une valeur théorique pour un azimut d'une nacelle de l'installation éolienne (2), ladite valeur théorique étant déterminée à partir au moins des données de mesure météorologiques reçues par les stations de mesure météorologiques, et déterminée à partir d'une prévision météorologique, et
- où l'installation éolienne (2) règle l'azimut de sa nacelle en fonction de la valeur théorique.

9. Système de commande d'un parc éolien selon la revendication 8, **caractérisé en ce que** l'ordinateur de commande central (14) reçoit des données de mesure météorologiques provenant de l'installation éolienne (2), et détermine les valeurs théoriques en outre en fonction des données de mesure météorologiques de l'installation éolienne (2).

10. Système de commande d'un parc éolien selon la revendication 8 ou 9, **caractérisé en ce que** les stations de mesure météorologiques (10) comprennent au moins un anémomètre et/ou un dispositif de mesure des amplitudes de la houle.

11. Système de commande d'un parc éolien selon l'une quelconque des revendications 8 à 10, **caractérisé en ce que** le dispositif de commande central (14) détecte un certain nombre de signaux d'erreur d'une installation éolienne respective (2) et, dans le cas d'un dépassement d'une valeur de seuil parmi le nombre des signaux d'erreur, émet un signal de maintenance.

12. Procédé de fonctionnement d'une installation éolienne comprenant un dispositif de commande de l'installation éolienne selon l'une quelconque des revendications 1 à 6, ledit procédé consistant :
- à recevoir, de l'extérieur de l'installation éolienne (2), une valeur théorique externe pour une valeur de réglage prévue pour un azimut de la nacelle, ladite valeur théorique étant déterminée en fonction au moins d'une valeur mesurée météorologique externe collectée à l'extérieur de l'installation éolienne (2), et déterminée en fonction d'une prévision météorologique,
- à régler au moins l'azimut de la nacelle (2a) de l'installation éolienne (2) en fonction de la valeur de réglage.
